# EUROPEAN PATENT APPLICATION

(11) **EP 2 236 977 A1**
(43) Date of publication of application: **06.10.2010**
(21) Application number: 10157869.8
(22) Date of filing: 26.03.2010
(51) Int. Cl.: G01B 7/14, F16D 66/00

(54) **Time-indicating rub pin for transient clearance measurement and related method**

(30) Priority: 30.03.2009 US 414145
(71) Applicant: General Electric Company, Schenectady, NY 12345 (US)
(72) Inventor: Willett, Fred, Burnt Hills, NY 12027 (US); Esler, David, Gloversville, NY 12078 (US); Balasubramaniam, Mahadevan, Ballston Lake, NY 12010 (US)
(74) Representative: Gray, Thomas

(57) **Abstract**

A transient clearance measurement apparatus for determining a minimum clearance between stationary and rotating components includes: at least one rub pin (36) secured to the stationary component (22, 24) and projecting toward a surface of the rotating component (12). The at least one rub pin (36) has one or more embedded wires (54) completing an electrical circuit, such that, in use, when the at least one rub pin is rubbed by the surface of the rotating component, the electrical circuit is broken.

## Description

This invention relates generally to rotary machine technology, and, more specifically, to the measurement of clearances between stationary and rotating components of a steam turbine, compressor or other rotary machine.

### BACKGROUND OF THE INVENTION

Various types of sensors have been used to measure the distance between two objects in widely disparate applications. For example, a steam turbine has a rotor formed with wheels (corresponding to the turbine "stages"), each of which mounts a row of rotating buckets or blades, the outer tips of which are disposed radially adjacent a respective stationary stator component. The clearance between the rotating buckets of a rotor wheel and the stator varies based on operating conditions, such as changes in temperature, oxidation of the bucket tips, and so forth. It is desirable that a minimum gap or clearance between the rotating buckets and the stator component be maintained during operation of the steam turbine in order to minimize leakage and maximize performance.

One existing sensor used to measure clearance is a multi-tip capacitance sensor that includes multiple probe tips to measure capacitance, enabling estimation of the radial clearance (or axial clearance, depending on the location of the sensor) between the stationary and rotating components as a function of gain of the signals from all of the probe tips of the sensor. Eddy current transducers and microwave sensors have also been used to measure clearances.

Clearances have also been measured mechanically through the use of rub pins. The rub pins are typically made of a soft metal or other material and are located on the stator side of the clearance. The pins are rubbed or abraded when contacted by the rotating component, e.g. the rotor wheel and its row of buckets or blades. Measurement of the remaining length of the pin after operation will indicate the minimum clearance i.e., the amount of clearance reduction, experienced during operation of the turbine (or compressor or other rotating machine) In the current and prior systems, clearance data is obtainable only upon disassembly of the machine to gain access to the rub pins and measurement of the remaining length of the pins. There remains a need therefore, for an improved rub pin construction that enables the gathering of clearance data without having to disassemble the machine.

### BRIEF SUMMARY OF THE INVENTION

In accordance with one exemplary but non-limiting aspect, the present invention relates to a transient clearance measurement apparatus for determining a minimum clearance between stationary and rotating components comprising: at least one rub pin secured to the stationary component and projecting toward a surface of the rotating component, the at least one rub pin having one or more embedded wires completing an electrical circuit, such that, in use, when the at least one rub pin is rubbed by the surface of the rotating component, the electrical circuit will be broken.

In another aspect, the invention relates to a rub pin for use in measuring clearances between stationary and rotatable components comprising an abradable pin body having one or more wires therein completing an electrical circuit; said one or more wires located substantially flush with an exposed end surface of said pin body such that, in use, when the pin body is rubbed by a rotating component, said electrical circuit is broken.

In still another aspect, the invention relates to a method of tracking a transient clearance between a stationary and a rotating component comprising: mounting a least one rub pin in the stationary component in close proximity to a surface of the rotating component; causing an electrical signal to be generated when a predetermined amount of material is removed from the rub pin resulting from engagement of the rub pin with the surface of the rotating component; and tracking reductions in clearance as a function of time.

The invention will now be described in greater detail in connection with the drawings identified below.

### BRIEF DESCRIPTION OF THE DRAWINGS

There follows a detailed description of embodiments of the invention by way of example only with reference to the accompanying drawings, in which:

FIGURE 1 is a partial cross-section of a steam turbine, illustrating rub pins arranged to measure radial and axial clearances between rotating and stationary turbine components in accordance with an exemplary but nonlimiting embodiment of invention;

FIGURE 2 is an enlarged detail of an exemplary rub pin construction;

FIGURE 3 shows an arrangement of plural rub pins arranged to measure radial clearance as a function of time in accordance with yet another exemplary but non-limiting embodiment of the invention;

FIGURE 4 shows an arrangement of plural rub pins arranged to measure axial clearance as a function of time in accordance with yet another exemplary but non-limiting embodiment of the invention;

FIGURE 5 shows an arrangement of circumferentially spaced rub pins for measuring axial clearance in accordance with another exemplary but nonlimiting embodiment of the invention;

FIGURE 6 is a view similar to Figure 5 but shows a variation in the rub pin spacing;

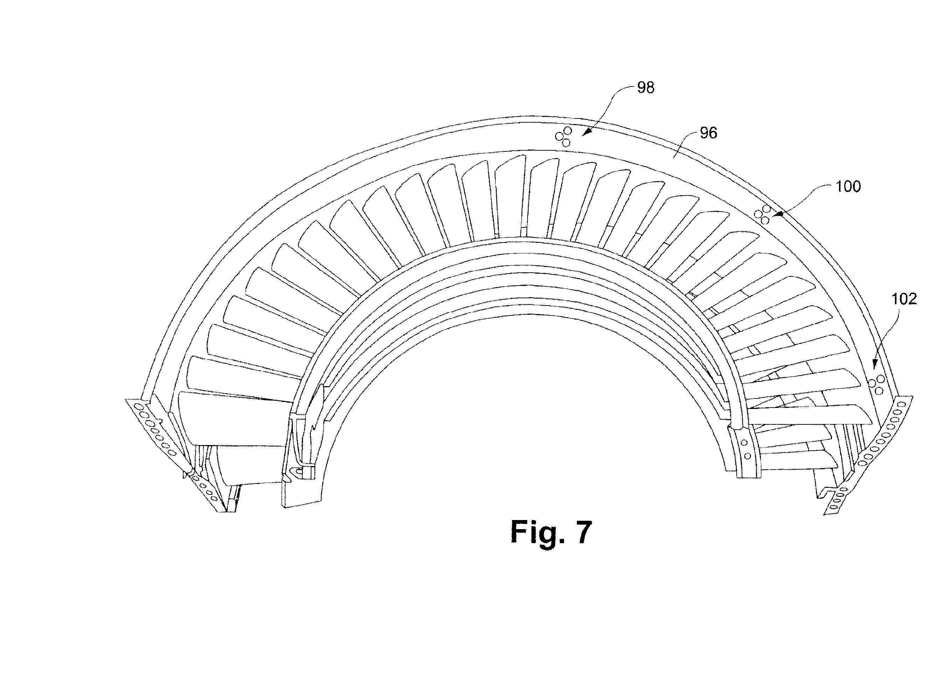

FIGURE 7 is a view similar to Figure 5 and 6 but showing another variation in rub pin placement at circumferentially spaced locations;

Figure 8 shows a screw-in-type rub pin in accordance with an exemplary but nonlimiting aspect of the invention;

Figure 9 is a transparent side elevation of a rub pin in accordance with another exemplary but nonlimiting aspect of the invention;

Figure 10 is a transparent side elevation of a rub pin in accordance with still another exemplary but nonlimiting embodiment; and

Figure 11 is an enlarged detail taken from Figure 10 but also showing engagement of the rub pin with a rotating component.

### DETAILED DESCRIPTION OF THE DRAWINGS

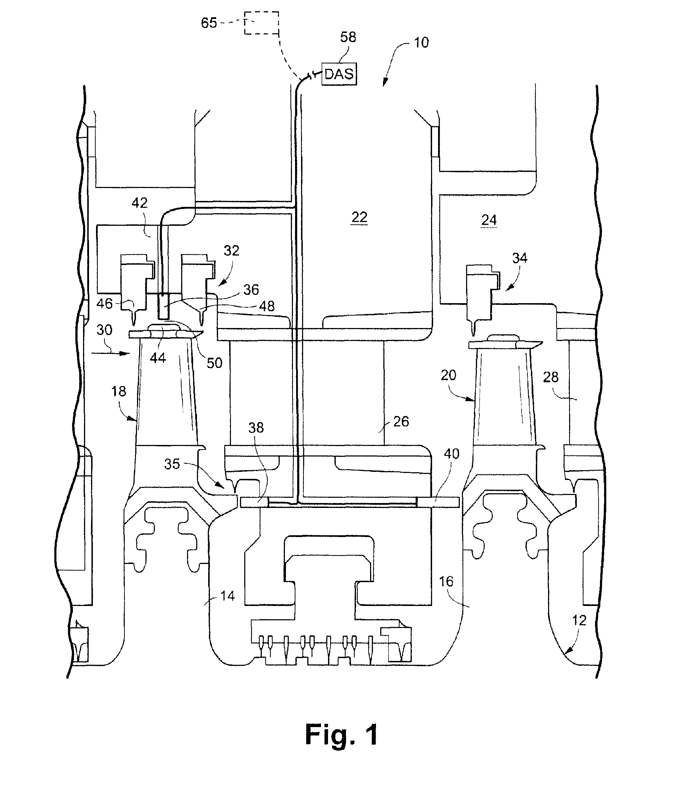

With reference to Figure 1, a steam turbine 10 is comprised in part of a rotor 12 provided with axially spaced wheels 14, 16, (only two shown, it being understood that the number of wheels corresponds to the number of turbine "stages"), each wheel mounting a plurality of circumferentially arranged buckets or blades 18, 20, respectively. Between each rotor wheel is a stator diaphragm 22, 24 which supports a circumferential row of stationary nozzles or vanes 26, 28 respectively. The steam path extends axially as shown by arrow 30, and it is important to prevent excess leakage at the radially outer tips of the blades 18, 20 and, in this regard, seals such as those shown at 32, 34 are typically employed to minimize leakage between the radially outer tips of the buckets or blades and the adjacent portion of the stator. Other seals are located to minimize leakage at, for example, an interface proximate the base of the bucket or blade and an axially adjacent surface of the stator. One such seal is shown at 35. For a variety of reasons, it is advantageous to know the transient radial and axial clearances between the rotor and stator during turbine operation.

Figure 1 also illustrates a plurality of rub pins 36, 38, 40 located on various stator surfaces radially and axially adjacent the bucket 18. Since all of the rub pins operate in substantially the same manner, only the rub pin 36 will be described in detail. The rub pin 36 is mounted in a stator portion 42 radially adjacent the outer tip cover or shroud 44 of the bucket 18, and axially between a pair of seals 46, 48. The rub pin 36 extends radially toward the tip cover or shroud 44, with a predetermined gap 50 therebetween.

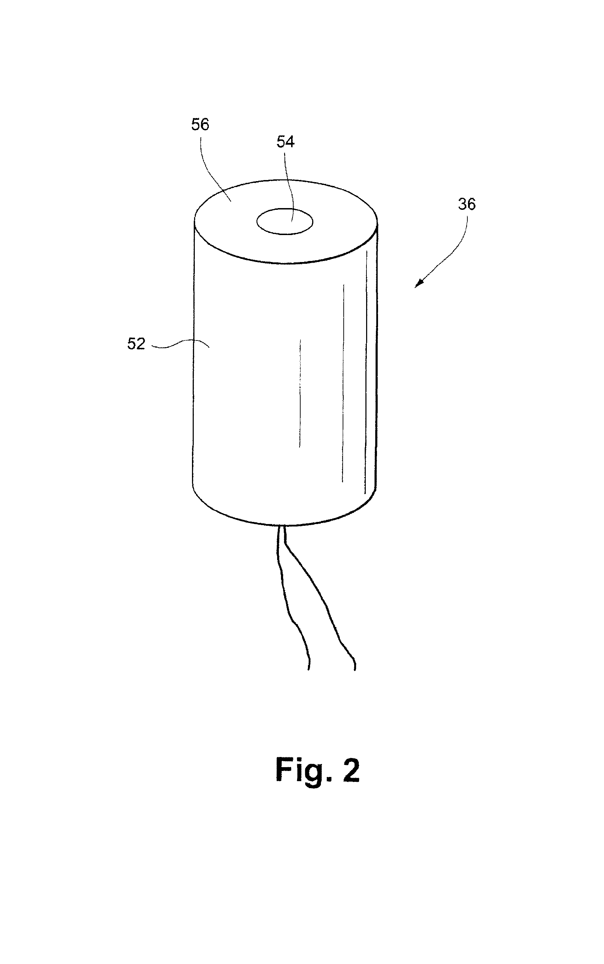

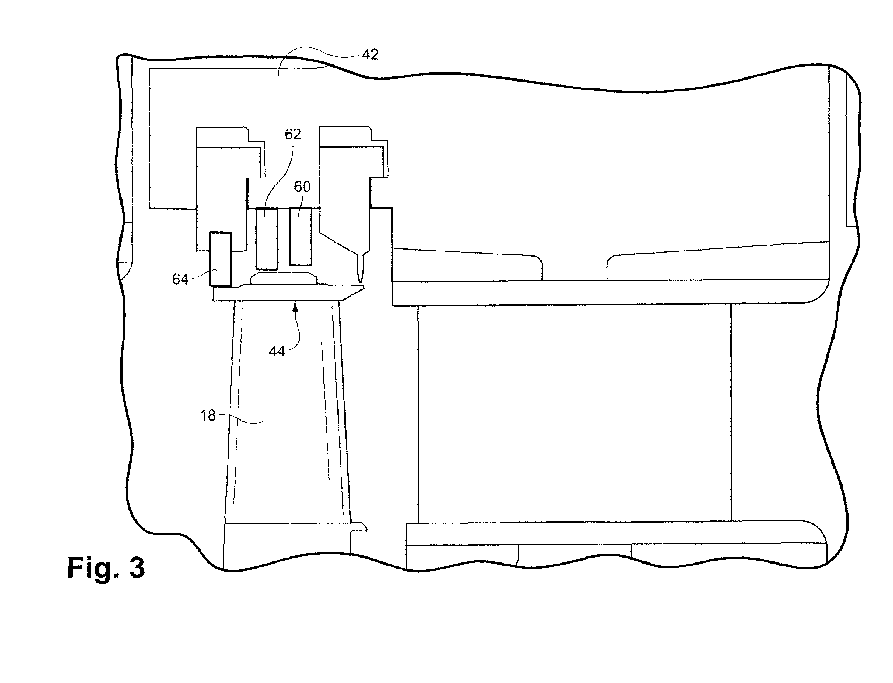

As best seen in Figure 2, the rub pin 36 in one exemplary but nonlimiting embodiment may include a solid substantially cylindrical body 52 fitted with a thermocouple 54 flush with the end surface 56 of the body 52. The thermocouple, formed by two dissimilar wire joined together, may be wired to a turbine data acquisition system 58 (Figure 1). During turbine operation, if the bucket tip cover or shroud 44 rubs the pin 36, the thermocouple will fail, and that information is transmitted to the data acquisition system 58. The data will also indicate that the specific or predetermined clearance between the bucket tip cover or shroud 42 at start-up will have been reduced at least by that specified clearance. Since it may be advantageous to gather additional data to determine the full extent of the clearance reduction, plural pins of different lengths may be employed. Figure 3 illustrates an arrangement of rub pins 60, 62 and 64 in proximity to the tip cover or shroud 44. The pins are axially spaced but confined to the radially outer portion of the bucket, with each rub pin arranged with a progressively increasing radial gap. Now, the gap closure can be measured as a function of time for a given circumferential position. In this regard, the circuit may incorporate a timer or a clock 65 (Fig. 1), synchronized with the data acquisition system, so that the time of the event can be matched to other operational data to deduce information about the operating state at the time of the rub.

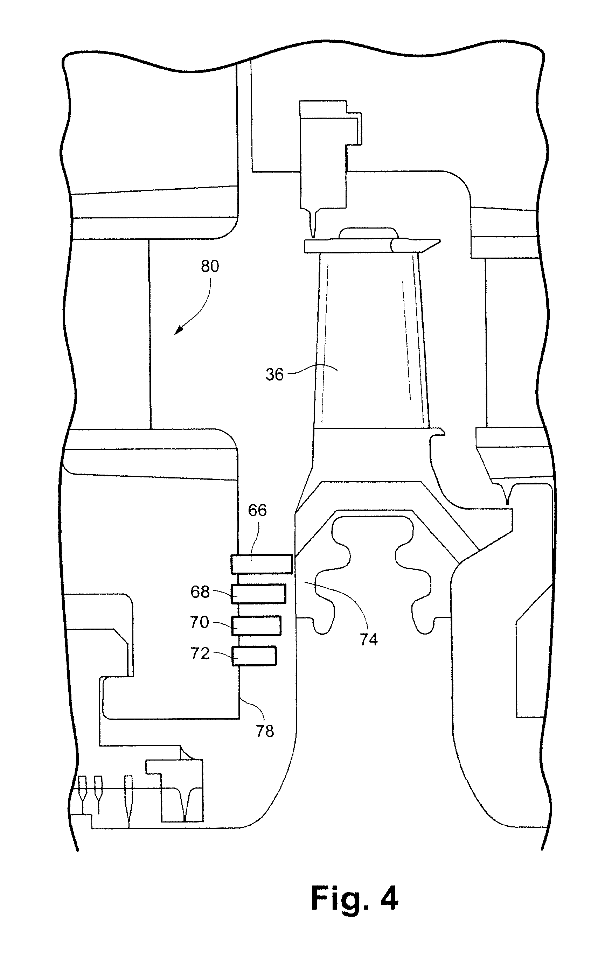

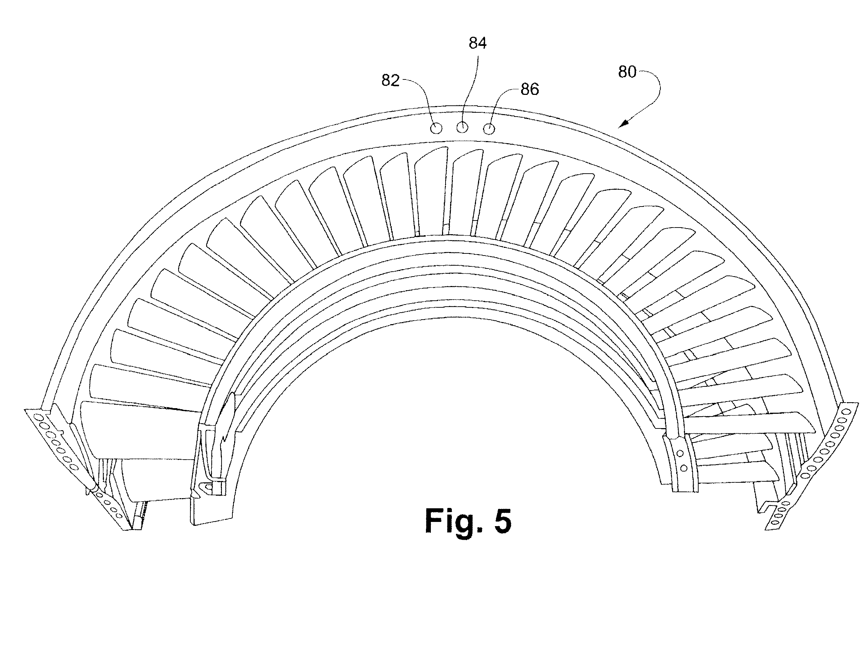

Multiple rub pins 66, 68, 70 and 72 are shown in an axial clearance arrangement in Figure 4 where, again, the length of the respective pins varies progressively to provide gap clearance data between the root portion 74 of the bucket or blade 76 and an axially adjacent surface 78 of the stator 80 as a function of time. Rub pins 82, 84, 86 could also be positioned circumferentially, over a small arc on the stator surface 80 as shown in Figure 5, so long as any circumferential variation over the arc is negligible.

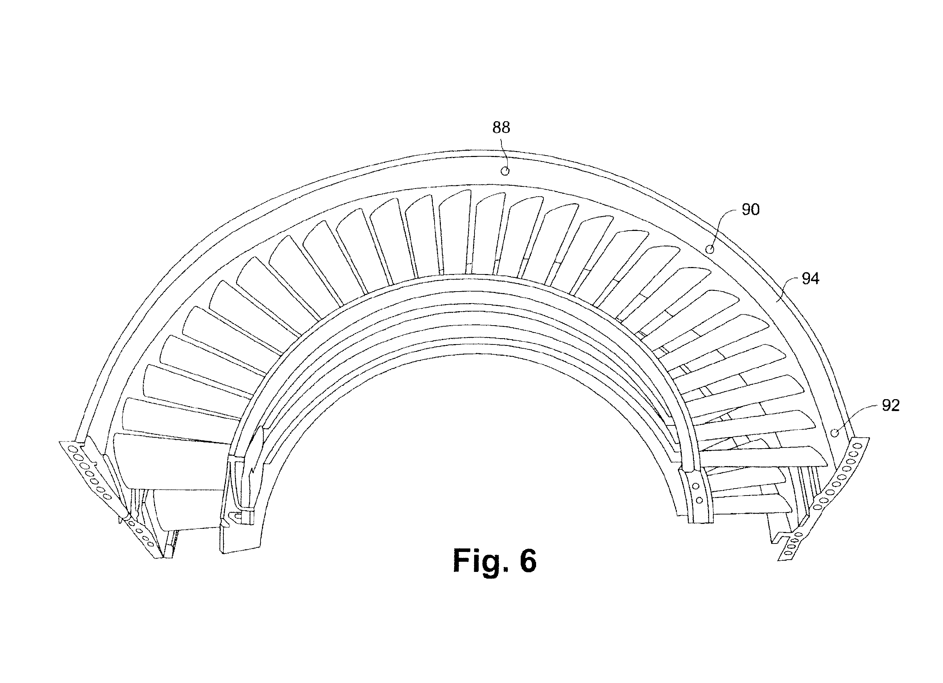

In the event stator eccentricity or ovalization is expected, rub pins 88, 90, 92 of the same length would be located with greater circumferential spacing along the stator surface 94 so as to detect the out-of-round condition, as shown in Figure 6. In the event that stator eccentricity or ovalization is not expected, the arrangement of Figure 6 may be utilized, but with pins of different lengths to achieve clearance data over time. An arrangement similar to Figure 6, but with rub pins provided on stator surface 96 in clusters 98, 100, 102 is employed to obtain additional data.

Preferably, the rub pins are made of an abradable material such as a relatively soft metal, plastic (e.g., Bakelite) or other suitable material, taking into account service temperatures. In addition, as an alternative to the thermocouple described above, a single wire of a circuit could be embedded in the rub pin, with the wires presenting an inverted U-shape to the end surface of the pin, with the base of the U located parallel to and adjacent or flush with the surface of the rub pin. In this way, rubbing of the pin will result in wearing of the wire sufficient to break or open the circuit.

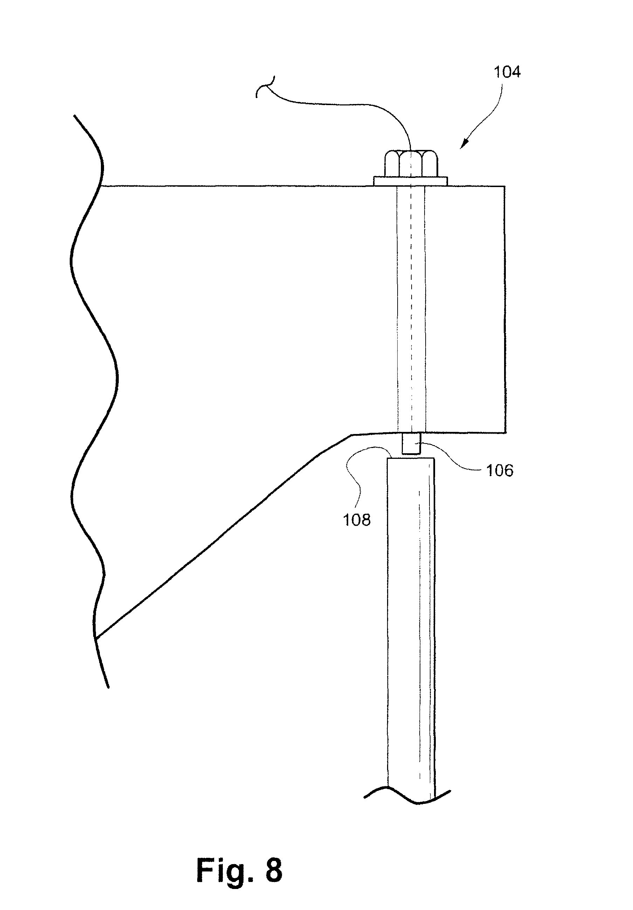

Other approaches to rub pin design may include reshaping of the tip of the pin to include, for example, a tapered tip with multiple circuits, as an alternative to using plural rub pins of different lengths. Another variation in the design would be to utilize screw-in type rub pins that could be easily installed in a retrofit operation. Screw-in rub pins would also prove valuable in test labs. A screw-in type pin 104 is shown in Figure 8, with the tip 106 adjacent a blade tip 108.

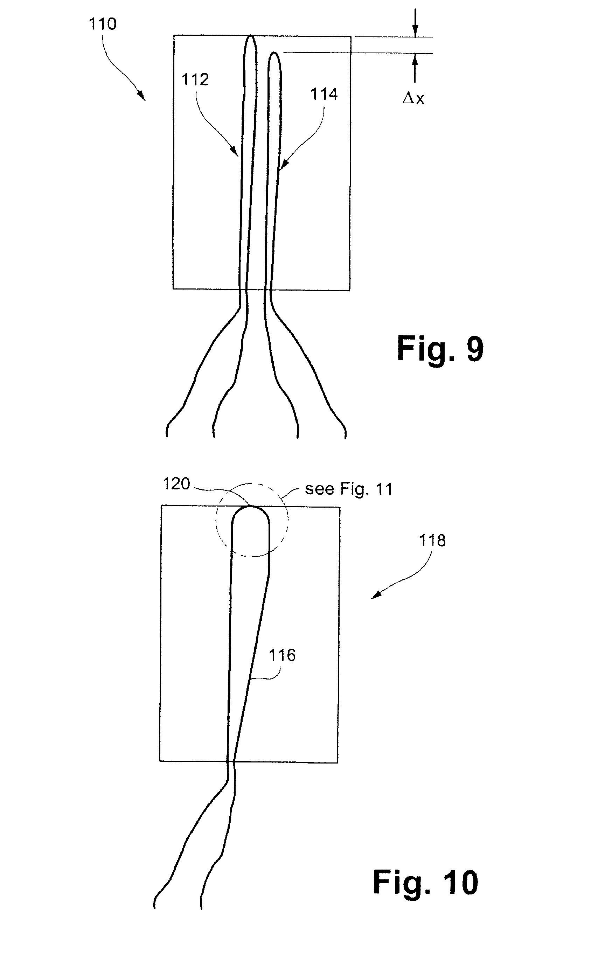

Figure 9 illustrates another rub pin 110 where multiple electrical circuits 112, 114 are contained in the same rub pin, with the rub points of each circuit located a predetermined distance, Δx, apart. This accomplishes the same result as the cluster of rub pins (i.e., monitoring clearance reductions as a function of time), but uses a single pin.

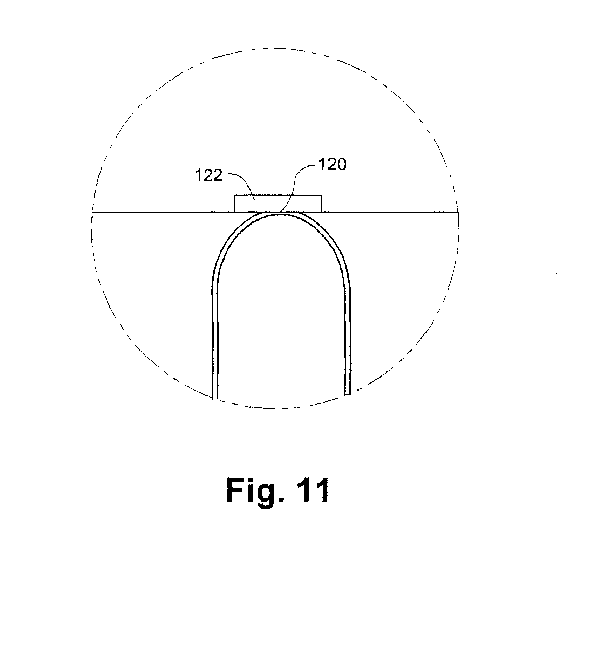

In Figures 10 and 11, one or more wires 116 are used in a rub pin 118. The wires are sufficiently thick that failure is not instantaneous when a rub occurs. A rub will remove some of the wire, reducing the wire thickness at the rub point 120 with the rotating component 122. The reduced wire thickness results in higher resistance. The resistance can be measured and rub incursion calculated from the resistance.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A transient clearance measurement apparatus for determining a minimum clearance between stationary (22, 24) and rotating (12) components comprising:
at least one rub pin (36, 38 or 40) secured to said stationary component and projecting toward a surface of said rotating component, said at least one rub pin having one or more embedded wires 54 completing an electrical circuit, such that, in use, when said at least one rub pin is rubbed by said surface of said rotating component, said electrical circuit will be broken.

2. The apparatus of claim 1 wherein said electrical circuit includes a timer or clock (65) and when said electrical circuit is broken said timer or clock stops.

3. The apparatus of claim 1 or 2 wherein said at least one rub pin comprises a plurality of rub pins (60, 62, 64) of different lengths, each having its own electrical circuit.

4. The apparatus of claim 3 wherein said electrical circuits are connected to a data acquisition system 58 enabling tracking of operational clearances as a function of time.

5. The apparatus of any one of the preceding claims wherein said at least one rub pin comprises a screw-in type pin (104).

6. The apparatus of any one of the preceding claims wherein said stationary component (22, 24) comprises a turbine stator and said rotating component comprises a turbine rotor, and wherein said minimum clearance is an axial or radial clearance.

7. The apparatus of claim 6 wherein said at least one rub pin (36, 38 or 40) is oriented axially or radially with respect to a rotational axis of said rotating component.

8. The apparatus of claim 2 wherein said at least one rub pin comprises a plurality of rub pins (60, 62, 64) of different lengths, each rub pin having its own electrical circuit, and wherein said timer or clock (65) is synchronized to a data acquisition system (58) enabling tracking of operational clearances as a function of time.

9. The apparatus of any one of the preceding claims wherein said at least one rub pin comprises plural rub pins (60, 62, 64 or 66, 68, 70, 72) of different lengths arranged to track radial or axial clearances.

10. The apparatus of any one of the preceding claims wherein said at least one rub pin comprises plural rub pins (82, 84, 86) of equal lengths spaced circumferentially about said stationary component.

11. A rub pin (36) for use in measuring clearances between stationary and rotatable components comprising a soft metal pin body (52) having one or more wires (54) therein adapted to complete an electrical circuit; said one or more wires (54) located substantially flush with an exposed end surface of said pin body such that, in use, when the pin body is rubbed by a rotating component, said electrical circuit is broken.

12. The rub pin of claim 11 wherein said one or more wires comprises a single wire.

13. The rub pin of claim 11 wherein said one or more wires comprise two dissimilar wires joined to form a thermocouple (54).

14. A method of tracking a transient clearance between a stationary and a rotating component comprising:
mounting a least one rub pin (36) in the stationary component (22) in close proximity to a surface of the rotating component (44); causing an electrical signal to be terminated when a predetermined amount of material is removed from said rub pin resulting from engagement of said rub pin with said surface of said rotating component; and
tracking reductions in clearance as a function of time.

15. The method of claim 14 wherein said stationary component comprises a turbine stator (22, 24) and said rotating component comprises a turbine rotor (12), and wherein said minimum clearance is an axial clearance.
